# EUROPEAN PATENT SPECIFICATION

(11) **EP 1 227 947 B1**
(45) Date of publication and mention of the grant of the patent: **11.01.2006**
(21) Application number: 00973098.7
(22) Date of filing: 08.11.2000
(51) Int. Cl.: B60J 10/08, B60J 10/00

(54) **SEALING, TRIMMING, GLASS-GUIDING OR FINISHING STRIPS**
DICHTUNGS-,TRIMM-, GLASFÜHRUNGS- ODER ZIERSTREIFEN
BANDES DE CALFEUTRAGE, D'AJUSTEMENT, DE GUIDAGE DE GLACES OU DE POLISSAGE

(30) Priority: 11.11.1999 GB 9926724
(43) Date of publication of application: 07.08.2002
(73) Proprietor: Laird Holdings Limited, Edinburgh EH2 3AP (GB)
(72) Inventor: VAN DEN OORD, Henricus, NL-5237 EH 'S-Hertogenbosch (NL)
(74) Representative: Foster, David Martyn
(86) International application number: PCT/GB2000/004289
(87) International publication number: WO 2001/034419

(56) References cited:
- EP-A- 0 712 747
- EP-A- 0 881 113
- DE-A- 19 651 733
- DE-U- 29 617 901
- GB-A- 2 327 451
- US-A- 4 513 044

## Description

The invention relates to sealing, trimming, glass-guiding or finishing strips. Sealing, trimming, glass-guiding or finishing strips embodying the invention, and to be described in more detail below by way of example only, are for use in carrying out sealing, trimming, glass-guiding or finishing functions in motor vehicle body construction.

EP-A-0 712 747 discloses a sealing strip having a base part covered by a skin defining an externally visible surface. Metal particles are placed in the skin by an electro-chemical deposition process.

DE-U-296 17901 discloses a sealing strip having a base part covered by a skin in which metal particles are in "permanent magnetic suspension".

EP-A-1031450 discloses a sealing strip comprising a tubular sponge bulb seal, with a thin layer of a magnetisable coating being extruded or coextruded onto the external surface portion of the bulb seal. The magnetisable coating is selectively magnetisable to provide a desired magnetic force level to optimise the balance between the effective sealing and the ease of door opening. However, EP-A-1 031 450 does not explicitly disclose the use of metal particles in a seal which are visible, no matter whether the seal is an automotive vehicle seal or a refrigerator seal. This document has a filing date prior to the filing date of the present application, and was published after the filing date of the present application , thus constituting a state of the art under article 54(3) EPC, which is not relevant to the question of inventive step.

According to the invention, there is provided a sealing, trimming, glass-guiding or finishing strip including a compressible sealing part carried by a mounting part for mounting the sealing part at a position to seal an opening, the sealing part being made with extruded material comprising a base part made of foamed material at least partly covered with a skin which defines an externally visible surface formed by extrusion carrying metallised or metal particles incorporated in the skin before or during the extrusion thereof, so as to modify the appearance of the skin.

According to the invention, there is also provided a method of modifying or enhancing the appearance of a sealing, trimming, glass-guiding or finishing strip including a compressible sealing part carried by a mounting part for mounting the sealing part at a position to seal an opening, the sealing part being made with extruded material comprising a base part made of foamed material at least partly covered with a skin which defines an externally visible surface formed by extrusion carrying metallised or metal particles, the method including incorporating the metallised or metal particles into the extruded material during or before the extrusion thereof so as to modify the appearance of the skin.

Further embodiments of the invention are referred to in the dependent claims.

Sealing, trimming, glass-guiding or finishing strips embodying the invention, for use in motor vehicle bodies, will now be described, by way of example only, with reference to the accompanying diagrammatic drawings in which:
Figure 1 is a perspective view of a motor vehicle to which the strips may be fitted;
Figure 2 is a perspective view of one of the sealing strips in cross-section which is not in accordance with the present invention; and
Figure 3 corresponds to Figure 2 but shows a modification which is in accordance with the present invention.

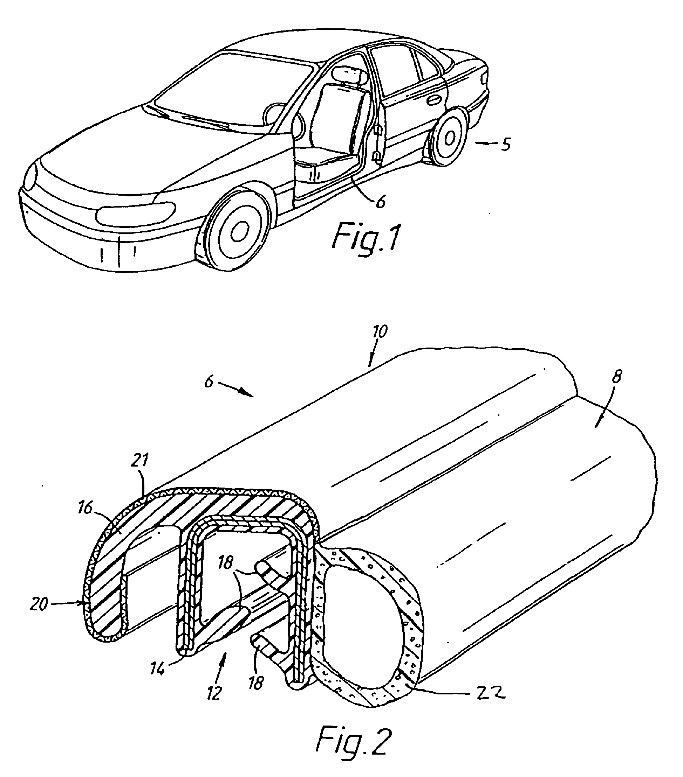

Figure 1 shows a motor vehicle body 5 with one of its doors removed to show a sealing strip 6 mounted around the periphery of the door opening. In use, the closing door closes onto the sealing strip 6 to provide a weather-tight seal.

One form of the sealing strip 6 is shown in Figure 2. It comprises a sealing portion 8 and a gripping or mounting portion 10. The gripping portion 10 is in the form of a longitudinal channel 12. In use, this is embracingly clamped to the surround of the door opening. More specifically, the surround of the door opening is normally defined by a flange where the inner and outer body panels are welded together.

As shown in Figure 2, the gripping portion 10 comprises a reinforcing core or carrier 14 such as made of resilient metal or other material, which is embedded in flexible material 16 such as rubber or plastics material. For example, the carrier 14 may be made of metal and in the form of (inverted) U-shaped elements arranged side-by-side to define the channel 12 and connected together by integral short connecting links or disconnected from each other. Other forms of carrier are, of course, possible. The carrier may be made of wire looped to and fro. The carrier 14 may be incorporated in the material 16 using a cross-head extruder. The carrier need not be made of metal. A flexible but substantially non-extensible tape may be incorporated into the material 16.

The material 16 is formed to define integral gripping lips 18 positioned on the opposite inside facing walls of the channel 12. These make contact with the opposite faces of the flange and increase the frictional gripping of the gripping portion 10. Advantageously, the material of the lips 18 is arranged to be softer than the remainder of the extruded material 16 to increase the frictional grip of the lips against the flange.

As shown in Figure 2, the material 16 is formed to define a so-called "cosmetic lip" 20. This is used to cover over, and to help to secure, the edge of a trim panel or the like inside the vehicle body.

The gripping portion 10 may be provided with a fabric covering 21.

The sealing portion 8 is of generally hollow tubular form comprising foamed material 22 to which may be co-extruded with the material 16. However, it is not necessary for the material 22 of the sealing portion 8 to be co-extruded with the material 16 of the gripping portion 10. Instead, the sealing portion 8 may be made separately, by extrusion from appropriate material(s), and then secured to the gripping portion 10 by adhesive.

In use, the gripping portion 10 mounts the sealing strip on the door surround, so that the sealing portion 8 extends around the door opening, on the outside of the vehicle body. The closing door thus partially compresses the sealing portion 8 which thereby provides a weather-tight seal. When mounted in this way, the mouth of the channel 12 will of course face away from the centre of the door opening.

In accordance with a feature of the strip being described, the material of the sealing section 8 has its external appearance modified or enhanced by the addition of metallised or metal particles. These may be added to the material 22 during or before the extrusion process. Pigments may also be added to the material 22 to colour it.

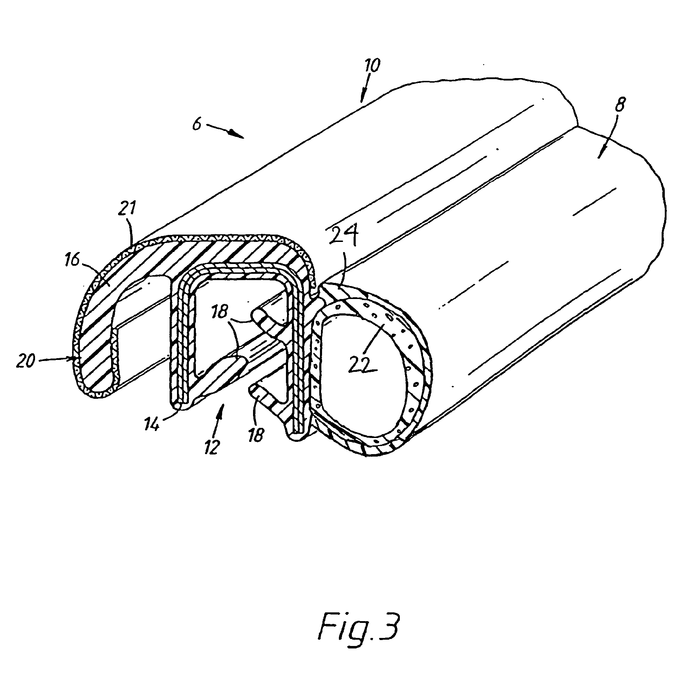

Figure 3 shows a modification in accordance with the present invention in which the sealing section 8 is provided with an external skin 24 which is of unfoamed material. Such a skin is advantageously added, by means of an extrusion process, when the material 22 is of open-cell foam such as when the material 22 is a thermoplastic elastomer material, for example. Where such a skin is provided, the metallised or metal particles are added to the material of the skin 24, instead of to the material 22.

In certain cases, where it is described to modify or enhance the appearance of the gripping section 10, the metallised or metal particles may be added to the material during or before the extrusion process. In such a case, there would of course be no fabric covering 21.

The use of added metallised or metal particles for appearance modification or enhancement purposes may also be applied to extruded plastics or similar material used to produce window guide channels or waist belts for sealing against movable glass window panes alongside the slot through which they emerge from or are lowered into the lower part of the vehicle door.

## Claims

1. A sealing, trimming, glass-guiding or finishing strip including a compressible sealing part (8) carried by a mounting part (10) for mounting the sealing part (8) at a position to seal an opening, the sealing part (8) being made with extruded material comprising a base part (22) made of foamed material at least partly covered with a skin (24) which defines an externally visible surface formed by extrusion carrying metallised or metal particles incorporated in the skin (24) before or during the extrusion thereof so as to modify the appearance of the skin (24).

2. A strip according to claim 1, **characterised in that** the skin (24) covers substantially all of the base part (22).

3. A strip according to claim 1 or claim 2, **characterised in that** the base part (22) is made of thermoplastic elastomer material.

4. A strip according to any preceding claim, **characterised in that** the base part (22) is of open-cellular form.

5. A strip according to any preceding claim, **characterised in that** the skin (24) is unfoamed

6. A strip according to any preceding claim, **characterised in that** the mounting part (20) is made with extruded material (16) and defines a further externally visible surface, the material (16) of the mounting part (20) at least where it defines the externally visible surface thereof having metallised or metal particles incorporated in it during or before the extrusion thereof.

7. A strip according to any preceding claim, **characterised in that** the mounting part (20) is channel-shaped.

8. A method of modifying or enhancing the appearance of a sealing, trimming, glass-guiding or finishing strip including a compressible sealing part (8) carried by a mounting part (10) for mounting the sealing part (8) at a position to seal an opening, the sealing part (8) being made with extruded material (22) comprising a base part (22) made of foamed material at least partly covered with a skin (24) which defines an externally visible surface formed by extrusion carrying metallised or metal particles, the method including incorporating the metallised or metal particles into the extruded material (16, 22) during or before the extrusion thereof so as to modify the appearance of the skin (24).

9. A method according to claim 8, **characterised in that** the base part (22) is extruded from thermoplastic elastomer material and is of open-cellular form, and **in that** the skin (24) is unfoamed.

## Patentansprüche

1. Dichtungs-, Trimm-, Glasführungs- oder Zierstreifen, der ein zusammendrückbares Dichtungsteil (8) beinhaltet, das von einem Befestigungsteil (10) für die Befestigung des Dichtungsteils (8) in einer Position aufgenommen wird, um eine Öffnung abzudichten, wobei das Dichtungsteil (8) mit extrudiertem Werkstoff gefertigt ist, der ein Basisteil (22) umfasst, das aus Schaumstoff gefertigt ist und zumindest teilweise mit einer Außenhaut (24) ummantelt ist, die eine äußerlich sichtbare Fläche umgrenzt und, die durch Extrudieren ausgebildet ist und metallisierte Teilchen oder Metall-Teilchen aufnimmt, die vor oder während des Extrudierens in die Außenhaut (24) eingearbeitet wurden, um das Erscheinungsbild der Außenhaut (24) zu modifizieren.

2. Streifen nach Anspruch 1, **dadurch gekennzeichnet, dass** die Außenhaut (24) im Wesentlichen das gesamte Basisteil (22) ummantelt.

3. Streifen nach Anspruch 1 oder 2, **dadurch gekennzeichnet, dass** das Basisteil (22) aus thermoplastischem Elastomer-Werkstoff gefertigt ist.

4. Streifen nach einem der vorangegangenen Ansprüche, **dadurch gekennzeichnet, dass** das Basisteil (22) eine offenzellige Ausgestaltung aufweist.

5. Streifen nach einem der vorangegangenen Ansprüche, **dadurch gekennzeichnet, dass** die Außenhaut (24) ungeschäumt ist.

6. Streifen nach einem der vorangegangenen Ansprüche, **dadurch gekennzeichnet, dass** das Befestigungsteil (20) mit extrudiertem Werkstoff (16) gefertigt ist und eine weitere äußerlich sichtbare Fläche umgrenzt, wobei der Werkstoff (16) des Befestigungsteils (20), zumindest dort wo er dessen äußerlich sichtbare Fläche umgrenzt, metallisierte Teilchen oder Metall-Teilchen aufweist, die vor oder während des Extrudierens eingearbeitet wurden.

7. Streifen nach einem der vorangegangenen Ansprüche, **dadurch gekennzeichnet, dass** das Befestigungsteil (20) kanalförmig ausgebildet ist.

8. Verfahren zur Modifizierung oder Verbesserung des Erscheinungsbildes eines Dichtungs-, Trimm-, Glasführungs- oder Zierstreifens, der ein zusammendrückbares Dichtungsteil (8) beinhaltet, das von einem Befestigungsteil (10) für die Befestigung des Dichtungsteils (8) in einer Position aufgenommen wird, um eine Öffnung abzudichten, wobei das Dichtungsteil (8) mit extrudiertem Werkstoff (22) gefertigt ist, der ein Basisteil (22) umfasst, das aus Schaumstoff gefertigt ist und zumindest teilweise mit einer Außenhaut (24) ummantelt ist, die eine äußerlich sichtbare Fläche umgrenzt und, die durch Extrudieren ausgebildet ist und metallisierte Teilchen oder Metall-Teilchen aufnimmt, wobei das Verfahren das Einarbeiten der metallisierten Teilchen oder Metall-Teilchen in den extrudierten Werkstoff (16, 22) während oder vor des Extrudierens umfasst, um das Erscheinungsbild der Außenhaut (24) zu modifizieren.

9. Verfahren nach Anspruch 8, **dadurch gekennzeichnet, dass** das Basisteil (22) aus thermoplastischem Elastomer-Werkstoff extrudiert wird und eine offenzellige Ausgestaltung aufweist und **dadurch gekennzeichnet, dass** die Außenhaut (24) ungeschäumt ist.

## Revendications

1. Bande d'étanchement, d'habillage, de guidage de vitre ou de finition, incluant une pièce d'étanchement incompressible (8) porté par une partie de montage (10) pour monter la pièce d'étanchement (8) à une position pour étancher une ouverture, la pièce d'étanchement (8) étant réalisé avec un matériau extrudé qui comprend une partie de base (22) produit en un matériau en mousse au moins partiellement couvert avec une peau (24) qui définit une surface visible de l'extérieur, formé par extrusion et portant des particules métallisées ou des particules en métal incorporé dans la peau (24) avant ou pendant son extrusion, de façon à modifier l'aspect de la peau (24).

2. Bande selon la revendication 1, **caractérisée en ce que** la peau (24) couvre sensiblement toute la partie de base (22).

3. Bande selon la revendication 1 ou 2, **caractérisée en ce que** la partie de base (22) est réalisée en matière élastomère thermoplastique.

4. Bande selon l'une quelconque des revendications précédentes, **caractérisée en ce que** la partie de base (22) a la forme d'une partie à cellules ouvertes.

5. Bande selon l'une quelconque des revendications précédentes, **caractérisée en ce que** la peau (24) n'est pas moussée.

6. Bande selon l'une quelconque des revendications précédentes, **caractérisée en ce que** la partie de montage (20) est réalisée avec un matériau extrudé (16) et définit une autre surface visible de l'extérieur, le matériau (16) de la partie de montage (20), au moins là où il définit la surface de celle-ci visible de l'extérieur, comprenant des particules métallisées ou des particules en métal incorporées en lui-même pendant ou avant son extrusion.

7. Bande selon l'une quelconque des revendications précédentes, **caractérisée en ce que** la partie de montage (20) a la forme d'un canal.

8. Procédé pour modifier ou pour améliorer l'aspect d'une bande d'étanchement, d'habillage, de guidage de vitre ou de finition qui inclut une pièce d'étanchement compressible (8) portée par une partie de montage (10) pour monter la partie d'étanchement (8) à une position pour étancher une ouverture, la partie d'étanchement (8) étant réalisée avec un matériau extrudé (22) comprenant une partie de base (22) réalisée en matériau en mousse couvert au moins partiellement avec une peau (24) qui définit une surface visible de l'extérieur formée par extrusion d'un matériau portant des particules métallisées ou des particules de métal, le procédé incluant d'incorporer les particules métallisées ou les particules en métal jusque dans le matériau extrudé (16, 22) pendant ou avant son extrusion, de façon à modifier l'aspect de la peau (24).

9. Procédé selon la revendication 8, **caractérisé en ce que** la partie de base (22) est extrudée à partir d'un matériau élastomère thermoplastique, et **en ce qu'**elle est sous forme à cellules ouvertes, et **en ce que** les peaux (24) ne présentent pas de mousse.
